# EUROPEAN PATENT APPLICATION

(11) **EP 1 731 217 A1**
(43) Date of publication of application: **13.12.2006**
(21) Application number: 06011682.9
(22) Date of filing: 06.06.2006
(51) Int. Cl.: B01F 13/08, H02K 49/10, H02N 15/04

(54) **Superconductive levitated stirrer**

(30) Priority: 07.06.2005 JP 2005167355; 05.06.2006 JP 2006155914
(71) Applicant: Maguneo Giken Co., Ltd., Saitama-shi, Saitama 339-0007 (JP)
(72) Inventor: Akiyama, Shinichi, Saitama-shi Saitama 339-0007 (JP); Murakami, Masato, Koto-ku Tokyo 135-8548 (JP)
(74) Representative: Becker Kurig Straus

(57) **Abstract**

A superconductive non-contact rotary device comprising; a bulk superconductor having a pinning effect arranged in a heat insulating cryogenic vessel, a permanent magnet arranged at one side of the vessel so as to face one surface of the bulk superconductor across a wall, and a permanent magnet arranged at the other side of the vessel facing the other surface of the bulk superconductor across a wall, one permanent magnet being rotated to make the other permanent magnet rotate in a non-contact state.

## Description

### BACKGROUND OF THE INVENTION

### 1. Field of the Invention

The present invention relates to the technology for transmitting rotational momentum in a non-contact state. In particular, it relates to technology for enabling mixing of chemical solution without contamination by the rotary device in the medical and biological industries and for driving a turntable while preventing contamination in a high vacuum and high pressure environment in the semiconductor field.

### 2. Description of the Related Art

If combining a high temperature superconductor and a permanent magnet, forces act each other in a non-contact state. These forces can be utilized to make the permanent magnet levitate over a high temperature superconductor cooled to the temperature of liquid nitrogen. Further, it is possible to suspend a permanent magnet below a high temperature superconductor cooled to the temperature of liquid nitrogen or suspend a high temperature superconductor cooled to the temperature of liquid nitrogen below a permanent magnet.

Various devices utilizing these forces for remote operation has been developed. For example, devices utilizing the levitation phenomenon for conveying objects in a levitating state and non-contact bearings have been developed. Further, as applications for these, superconductive levitating flywheel type energy storage devices for storing energy by rotating a levitated disk have been developed (see Masato Murakami, World Scientific, Singapore, 1991, "Melt Processed High Temperature Superconductors").

The stable levitation phenomenon is a phenomenon occurring due to the fact that a superconductor has a pinning effect. A superconductor exhibits the phenomenon called the "Meissner effect" of completely expelling a magnetic field, but the Meissner effect alone is not sufficient to stabilize the levitation phenomenon.

If dispersing normal conducting phase particles in a type II superconductor, the magnetic field entering the superconductor, that is, the quantized flux, is trapped at a normal conducting region. This is called the "pinning effect". Due to this pinning effect, the levitation phenomenon is stabilized and a magnet can be suspended below the superconductor or the superconductor can be suspended below a magnet.

When making a magnet levitating above a superconductor or making a magnet suspended below a superconductor rotate, if the magnetic field is uniform, the magnet will rotate without friction. On the other hand, if the magnetic field is not uniform, a frictional force corresponding to the non-uniformity of the magnetic field will be generated in response to the rotation of the magnet.

A device utilizing the levitation phenomenon of a superconductor to stir a solution in a stirring vessel in a state without the stirrer contacting the walls of the stirring vessel has already been developed (see Japanese Patent Publication (A) No. 2000-124030 and Japanese Patent Publication (A) No. 2003-144891).

This device is comprised of three parts: a magnet rotating part above the stirring vessel, a rotating part comprised of a shaft having magnets at its two ends arranged in the stirring vessel, and a fixed part comprised of a superconductor below the stirring vessel. Further, the shaft having magnets at its two ends has blades attached to one end. These blades rotate in the stirring vessel to stir the solution.

This stirring system rotates in a non-contact state by the following principle.

First, the superconductor below the stirring vessel and the magnet at the bottom of the shaft in the stirring vessel are magnetically coupled in a non-contact state by virtue of the pinning effect. The magnetic field of the magnet at the bottom of the shaft is designed to be uniform in the rotation direction, so the magnet freely rotates without any frictional force.

At the top of the device, the magnet provided at the top of the shaft where the blades are provided and the rotation drive magnet above it are magnetically coupled in a non-contact state. These magnets are arranged in the rotation direction to deliberately generate the same magnetic field distribution like NSNS. When the top magnet rotates, the magnet on the shaft also rotates.

That is, in this stirring system, by giving rotation by the top magnetic coupling and supporting the rotation by the pinning effect of the bottom superconductor, non-contact rotation in the stirring vessel becomes possible.

That is, in this conventional system, coupling between magnets and coupling between a superconductor and magnet are utilized to realize a non-contact stirring system with a combination of a power transmission function, stable levitation function, and free rotation function.

However, during the stirring process, the phenomenon of the decoupling of the bottom superconductive bearings sometimes takes place and becomes a problem for stable operation. That is, if the bottom superconductive coupling is lost, the top two magnets contact due to the attraction force, and thereby non-contact rotation becomes impossible.

To restore the non-contact rotation, the stirring process has to be stopped and all settings must be reset from the start. The reason why this problem arises is as follows:

The attraction force between the top two magnets is in inverse proportion to the fourth power of the distance for a small gap. When the distance between the top two magnets becomes small, at the bottom, conversely the distance between the magnet and superconductor becomes large and thereby the attraction force at the bottom becomes small. For this reason, if the distance between the top two magnets becomes smaller than the initial setting distance due to some sort of disturbance during the stirring process, the balance between the top and bottom magnetic couplings will be lost.

When considering a practical use of the stirring device utilizing the superconductivity phenomenon in the medical and biological industries, since the stirring operation has to be stopped if the above problem takes place, the conventional system will be difficult to be installed into a real operating line. For this reason, while the conventional system enabled us to realize a stirring mechanism in a non-contact state, it has only been used as an experimental device.

### SUMMARY OF THE INVENTION

Therefore, an object of the present invention is to provide a non-contact rotary device utilizing the superconductivity phenomenon which is able to be used in the medical and biological industries or the semiconductor field.

The problem in the conventional system lies in the utilization of the magnetic coupling between the magnets. The force acting between magnets is inversely proportional to the fourth power of the distance. For this reason, if the distance between magnets is made smaller even slightly, the attraction force between magnets rapidly increases.

On the other hand, in magnetic coupling between a superconductor and a magnet, there are simultaneously an attraction force and a repulsion force, so the force acting between the superconductor and magnet is not so sensitive to the distance between the two.

That is, in magnetic coupling utilizing superconductivity, since there are both an attraction force and a repulsion force, just one force does not act largely alone. In addition, these forces act to fix the distance between the superconductor and the magnet. For this reason, if it were possible to realize a non-contact rotation mechanism by using the magnetic coupling between the superconductor and the magnet alone, the problem of the magnetic de-coupling and the operation interruption.

Therefore, the inventors came up with the idea of realizing a non-contact rotation mechanism by using magnetic coupling between a superconductor and a magnet alone.

As explained above, due to the pinning effect, both an attraction force and a repulsion force act between a superconductor and a magnet and the distance between the superconductor and the magnet is fixed. When rotating the magnet or the superconductor in this state, if the magnetic field is uniform, no friction will occur in the rotation.

On the other hand, if the magnetic field is not uniform, friction will occur during the rotation, so the magnetic field distribution in the rotational direction can be suitably controlled to make the magnet and the superconductor synchronously rotate.

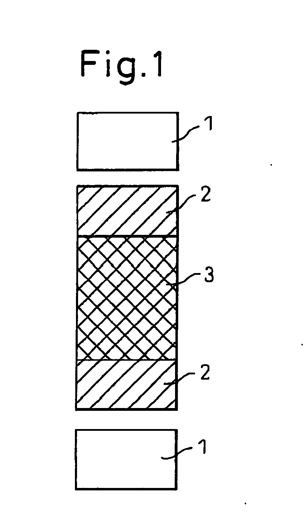

The inventors confirmed this synchronous rotation of a magnet and a superconductor in a non-contact rotation mode with the basic structure shown in FIG. 1. In this mechanism, if making the lower magnet 1 rotate, an upper magnet 2 also rotates via superconductors 2.

Note that in this system, if one increases the distance between the magnets 1 by inserting plastic 3 in between two superconductors 2, one can reduce unfavorable interaction of the magnets 1.

The present invention was made based on this rotation mechanism and has as its gist the following.

(1) A superconductive non-contact rotary device comprising; a bulk superconductor having a pinning effect arranged in a heat insulating cryogenic vessel, a permanent magnet arranged at one side of the vessel so as to face one surface of the bulk superconductor across a wall, and a permanent magnet arranged at the other side of the vessel facing the other surface of the bulk superconductor across a wall, one permanent magnet being rotated to make the other permanent magnet rotate in a non-contact state.

(2) A superconductive non-contact rotary device comprising; a double bulk superconductor, comprised of bulk superconductors having a pinning effect fixed to the two ends of a nonmagnetic member, arranged in a heat insulating cryogenic vessel, a permanent magnet arranged at one side of the vessel so as to face one surface of the double bulk superconductor across a wall, and a permanent magnet arranged at the other side of the vessel facing the other surface of the double bulk superconductor across a wall, one permanent magnet being rotated to make the other permanent magnet rotate in a non-contact state.

(3) A superconductive non-contact rotary device as set forth in (1) or (2), wherein a shaft is provided at one of the permanent magnets, a permanent magnet having a pole surface perpendicular to the shaft is fastened to the other end of the shaft, the heat insulating cryogenic vessel in which the bulk superconductor having the pinning effect is arranged is arranged so that one surface of the bulk superconductor faces the pole surface of the permanent magnet across the wall, and precessional motion of the shaft is suppressed.

(4) A superconductive non-contact rotary device as set forth in any one of (1) to (3), wherein the bulk superconductor is a superconductor of a composite structure containing a ferromagnetic material.

(5) A superconductive non-contact rotary device as set forth in any one of (1) to (4), wherein the bulk superconductor part is comprised of multiple superconductors.

(6) A superconductive non-contact rotary device as set forth in any one of (1) to (5), wherein the bulk superconductor is a superconductor provided with facing surfaces larger than the pole surfaces of the facing permanent magnets.

(7) A superconductive non-contact rotary device as set forth in any one of (1) to (6), wherein the permanent magnets are multipole structure permanent magnets.

(8) A superconductive non-contact rotary device as set forth in any one of (1) to (7), wherein stirring blades are attached to one of the permanent magnets and the stirring blades are rotated in a non-contact state through the wall of a sealed vessel.

(9) A superconductive non-contact rotary device as set forth in any one of (1) to (8), wherein a turntable is attached to one of the permanent magnets and the turntable is rotated in a non-contact state through the wall of a sealed vessel.

According to the present invention, the superconductivity phenomenon can be utilized to make a rotary body rotate in a non-contact state, so that various solutions can be stirred while preventing contamination of the material due to rotation in a contact state. Further, according to the present invention, a rotary body can be rotated in a non-contact state at a high speed while suppressing precessional motion, and solutions can be efficiently stirred while preventing contamination of the material.

### BRIEF DESCRIPTION OF THE DRAWINGS

These and other objects and features of the present invention will become clearer from the following description of the preferred embodiments given with reference to the attached drawings, wherein:
FIG. 1 is a view of the basic structure of a non-contact rotation system using magnets and superconductors;
FIG. 2 is a view of an embodiment of the present invention;
FIG. 3 is a view of an embodiment of the present invention ready for rotation;
FIG. 4 is a view of an example of the arrangement of magnets in a rotary member;
FIG. 5 is a view of a mode of a stirring experiment according to the present invention;
FIG. 6 is a view of another example of a device according to the present invention; and
FIGS. 7A to 7C are views showing the composite structure of a superconductor and a ferromagnetic material, wherein FIG. 7A shows the state of the superconductor formed with holes, FIG. 7B shows the state where the ferromagnetic material is inserted into the holes, and FIG. 7C shows the state where a low melting point alloy is filled between the superconductor and ferromagnetic material to fasten them.

### DESCRIPTION OF THE PREFERRED EMBODIMENTS

Preferred embodiments of the present invention will be described in detail below while referring to the attached figures.

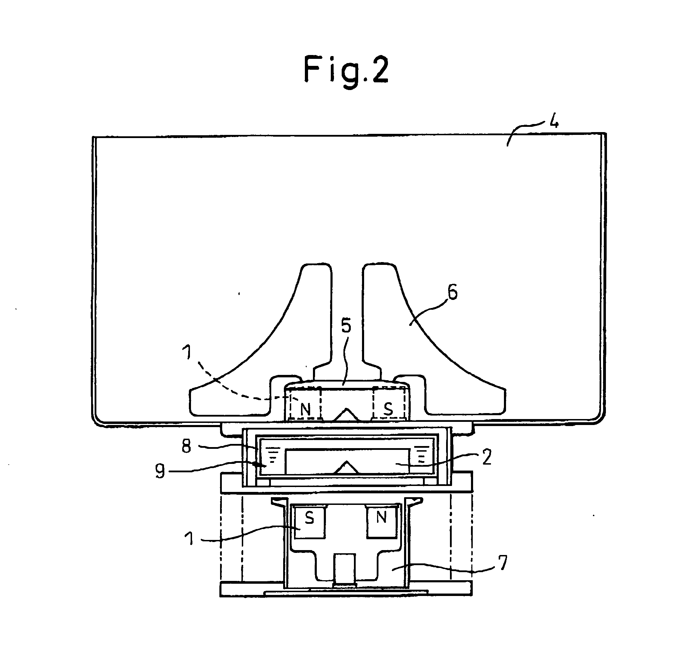

A non-contact rotation mechanism was utilized to fabricate a stirring device of the structure shown in FIG. 2. Inside the stirring device 4, a rotary body 5 including magnets 1 and with blades 6 is provided. At the bottom of the stirring device 4, a heat insulating vessel 8 containing a superconductor and connected to a vacuum pump (not shown) is provided.

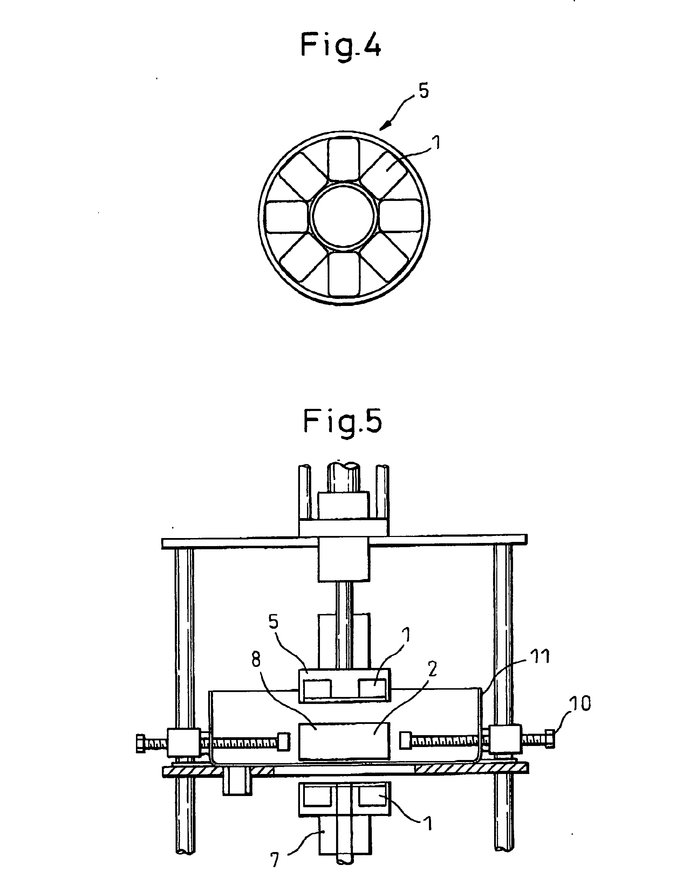

Further, below this is provided a rotation control device 7 containing magnets 1. The magnets 1 provided in the rotary body 5 inside the stirring device 4 and the rotation control device 7 are arranged with N poles and S poles alternating along the circumferential direction to form multipole structures. FIG. 4 shows an example of the arrangement of the magnets 1 in the rotary body 5. In the figure, they are arranged with four N poles and four S poles alternating along the circumference of the rotary body.

The greater the number of poles in the multipole structures of the magnets, the more preferable in terms of forming strong magnetic coupling with the superconductor, but the point is that it is enough that strong magnetic coupling with the superconductor can be formed. The multipole structures of the magnets are not limited to any specific structures. The multipole structures of the magnets in the present invention may be designed considering the area of the superconductor, the distance from the superconductor, the strength of the magnetic coupling, etc.

As shown in FIG. 2, the heat insulating vessel 8 is supplied with a coolant 9 (for example, liquid nitrogen) so as to cool the superconductor 2 to the critical temperature or below. As a result, the superconductor 2 in the heat insulating vessel 8 is magnetically coupled with the magnets 1 in the rotary body 5 and the magnets 1 in the rotation control device 7.

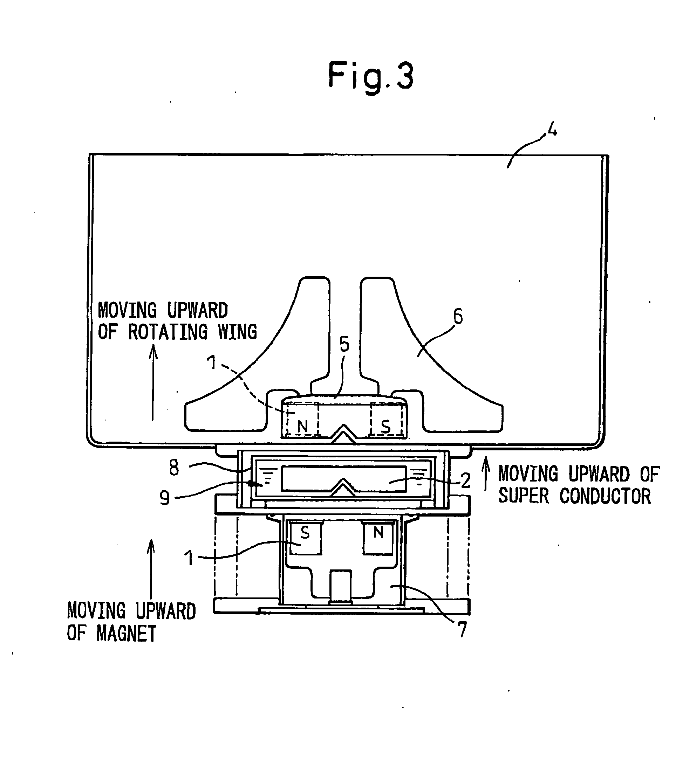

In the state with the superconductor and magnets magnetically coupled, as shown in FIG. 3, the rotation control device 7 is raised. Due to this rise, the superconductor 2 and the magnets 1 rise while maintaining a distance from each other. The magnets 1 in the rotary body 5 and the superconductor 2 in the heat insulating vessel 8 are fixed in a non-contact state.

In this state, when rotating the rotation control device 7, along with the rotation of the magnets 1, the superconductor 2 magnetically coupled with the magnets 1 rotates and, further, the magnets 1 in the rotary body 5 magnetically coupled with the superconductor 2 rotate. Due to this rotation, the blades 6 rotate inside the stirring device 4 in a non-contact state and therefore can stir the inside material.

FIG. 5 shows the mode of a stirring experiment according to the present invention. The heat insulating vessel 8 housing the superconductor 2 is fastened to the bottom of the stirring vessel 11 by fasteners 10 provided with screw mechanisms. The rest of the structure is basically the same as the structure shown in FIG. 2.

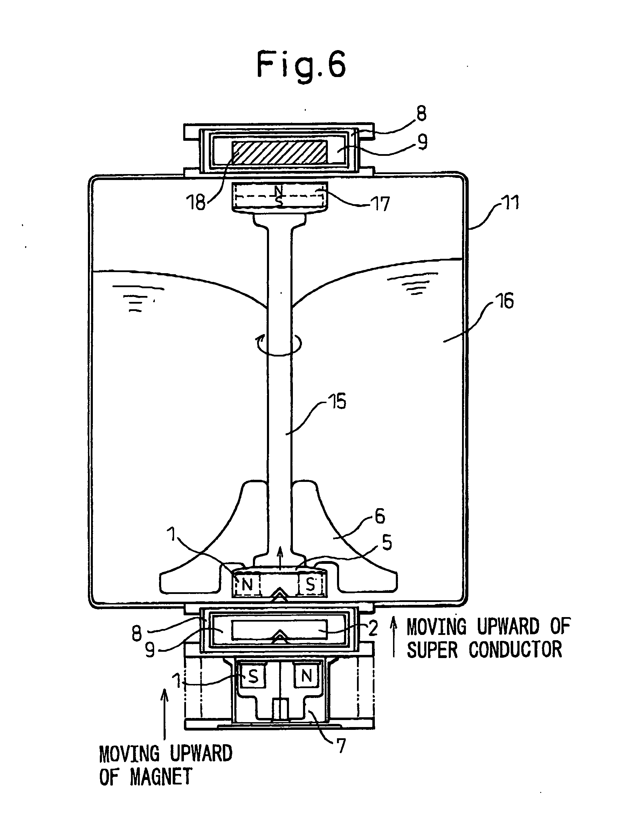

Further, FIG. 6 shows another example of a stirring device of the present invention. In this stirring device, a shaft 15 is attached to the center of the rotary body 5 provided with the blades 6. At one end of this shaft (in the figure, top end), a magnet 17 is arranged fastened inside the heating insulating vessel and facing a superconductor 18 cooled by the coolant 9 across the wall. Note that the magnet structure at the shaft end, as shown in FIG. 6, differs from the magnet structure forming the non-contact rotation mechanism.

In the stirring device shown in FIG. 2 and FIG. 3, while the rotary body 5 is rotating, if the flow of the stirred solution becomes stronger, the load on the blades 6 due to the stirred solution increases and the rotation of the rotary body 5 becomes unstable, whereby the rotary body 5 sometimes begins to engage in precessional motion.

When this motion starts, the rotary body 5 should be operated at a higher speed. Further, if this motion is amplified, it will lead to damage to the stirring device or the rotation mechanism.

The stirring device shown in FIG. 6 uses a mechanism similar to the non-contact rotation mechanism at one end of the rotary body 5. A structure is employed where the pinning effect of the superconductor suppresses the precessional motion of the rotary body 5 and stabilizes and increases the speed of the rotation. By employing this structure, even when there is a large amount of the stirred solution 16 in the stirring vessel 11, it is possible to efficiently stir the stirred solution 16 stably at a high speed.

In the present invention, the superconductor should be one which can form a magnetic coupling of the required strength with the magnet. It is not limited to a superconductor of a specific material, shape, or structure, but the superconductor is preferably a RE-Ba-Cu-O-based (RE: rare earth elements) superconductor material which can form a strong coupling with the magnet at the liquid nitrogen temperature or below.

The superconductor is a rotary body, so a cylindrical shape is preferable. The area of the surface facing the magnet may be suitably determined from the viewpoint of forming strong coupling with the magnet and maintaining smooth rotation.

That is, the dimensions of the superconductor and the dimensions of the magnet may be suitably determined from the above viewpoint. If the dimensions of the superconductor facing the magnet are made larger than the dimensions of the pole surface of the magnet, the stability of the rotation increases, and hence this is preferable.

The superconductor may be structured as a single piece or may be structured as a plurality of superconductors assembled together. Further, it may be a composite structure with ferromagnetic material rods embedded into the superconductor.

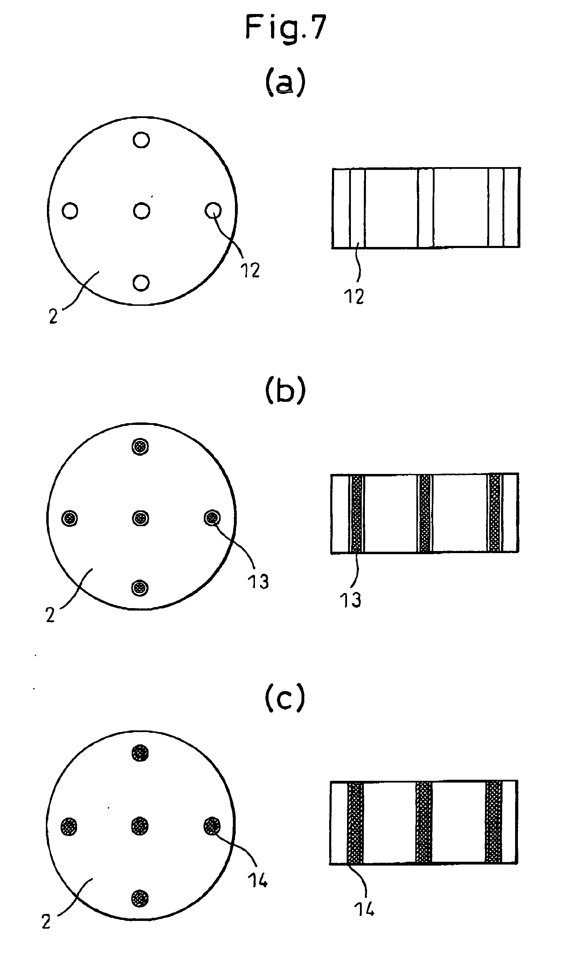

FIGS. 7A to 7C show an example of that composite structure. The superconductor 2 is formed with several holes 12 (in the figure, five holes) (see FIG. 7A). Rods 13 made of a ferromagnetic material are inserted into the holes 12 (see FIG. 7B). The gap between the superconductor 2 and the ferromagnetic material 13 is filled with a low melting point alloy (for example, Bi-Pb-Sn-Cd alloy etc.) to fasten the ferromagnetic material 13 (see FIG. 7C).
**[0055]** In a superconductor of this composite structure, the magnetic field due to the magnet concentrates at the ferromagnetic material, so the magnetic coupling can be strengthened.

If assembling a plurality of superconductors to form a rotary body formed by a superconductor, it is possible to increase the dimensions of the rotary body formed by the superconductor and possible to make the superconductive characteristics uniform, so stable, smooth rotation can be maintained.

### EXAMPLES

Below, the present invention will be explained in detail based on examples. The conditions employed in the examples are those adopted for confirming the workability and the effects of the present invention, but the present invention is not limited to the conditions described below. The present invention can employ various conditions to achieve the object of the present invention without departing from the scope of the present invention.

### Example 1

As a superconductor, an Sm-Ba-Cu-O-based superconductor having a diameter of 45 mm and a height of 15 mm was used. The superconductor was fabricated by the following procedure.

A powder material comprised of SmBa₂Cu₃O_{y} and Sm₂BaCuO₅ mixed in a ratio of 3:1, Ag₂O added in an amount of 10 mass%, and Pt added in an amount of 0.5 mass% was sufficiently mixed by a mortar and pestle, then was shaped by a uni-axial press and further shaped by cold isostatic pressing under a pressure of 200 MPa to prepare a precursor.

This precursor was heated in the air to 1100°C and cooled to 1050°C at a rate of 50°C/h, then an NdBa₂Cu₃O_{y} single crystal was placed on the precursor as a seed crystal. The precursor was gradually cooled at a cooling rate of 0.5°C/h to 900°C to cause crystallization, was then furnace-cooled to room temperature. After furnace cooling, the crystal was annealed in flowing oxygen at 400°C for 100 hours to impart a superconductive property.

Commercially available Fe-Nd-B magnets were used to prepare two permanent magnets having outside diameters of 45 mm, heights of 15 mm, and four poles NSNS in the circumferential direction.

First, the superconductor was placed at the bottom of an aluminum vessel corresponding to the heat insulating vessel. In this state, a rotation control device comprised of a rotary part with a magnet fixed to the front end was placed so that the magnet and superconductor faced each other. The gap from the bottom of the vessel to the magnet was made 8 mm.

Next, a permanent magnet provided with blades was placed at the bottom of the aluminum vessel corresponding to the stirring vessel. The vessel was fixed at a position giving a distance of 8 mm from the bottom of the vessel to the top surface of the superconductor.

In this state, the vessel housing the superconductor was filled with liquid nitrogen to cool the superconductor for about 15 minutes. In this cooling state, the rotation control device was moved upward by about 4 mm. Due to this movement, both the superconductor and the magnet move upward by about 4 mm. Due to this movement, the superconductor levitates in the liquid nitrogen. Further, the topmost magnet levitates in the air.

In this levitating state, the rotation control device was rotated at 50 rpm. Along with this rotation, it was confirmed that this topmost magnet also rotates at 50 rpm. This shows that the rotation of the bottom magnet is transmitted to the upper magnet through the superconductor, that is, in a non-contact state.

In this way, the basic operation of the rotation control device could be confirmed, so the superconductor was once warmed to room temperature. Further, the topmost magnet was covered with aluminum and blades were attached. Next, the topmost vessel was separately filled with blue paint and water.

Next, the superconductor vessel was filled with liquid nitrogen and, in the same way as before, the rotation control device at the bottommost part was moved upward by 4 mm. The superconductor levitated in the liquid nitrogen and the magnet with the blades levitated in the water. In this levitating state, the rotation control device was rotated, whereby the water was stirred and the blue paint dissolved in the water as could be clearly observed.

In this way, it was confirmed that by utilizing a non-contact rotation system combining a superconductor and two magnets, it was possible to stir the solution composed of blue paint and water in a non-contact state.

In this stirring experiment, when the rotational speed of the rotation control device was set to 10 rpm, the magnet provided with the blades rotated at 10 rpm, but when the rotational speed was raised to 20 rpm, the rotation of the magnet was slightly delayed. This is because the magnetic coupling of the superconductor and magnets was insufficient, whereby sufficient torque cannot be obtained for transmitting rotation. As a result, the viscosity resistance of water caused a delay in the rotation.

Therefore, as the permanent magnets, ones having diameters of 45 mm, heights of 20 mm, and eight NS poles were used. As a result, it was confirmed that the magnet provided with the blades rotated tracking the other magnet up to 20 rpm.

In this way, by increasing the number of poles of the magnets, it is possible to increase the force of the magnetic coupling. Note that in addition to increasing the poles, it is also possible to increase the force of the magnetic coupling by suitably arranging the distribution of the magnetic poles.

### Example 2

In the process of repeating the stirring experiment of Example 1, it was learned that at the time of setting, the upper and lower magnets interact. This is because at the start of the setting, the superconductor present between one magnet and the other is normal conducting and does not exhibit any magnetic shield effect. Due to such interaction, the upper and lower magnets sometimes could not be stabilized at a predetermined position and inclined.

Therefore, to reduce this interaction, the inventors experimented with increasing the distance between magnets. As one experiment, an epoxy plastic cylinder was inserted between the two superconductors (see FIG. 1).

As the superconductors, two commercially available Y-Ba-Cu-O-based superconductors having diameters of 45 mm and heights of 15 mm were used. As the permanent magnets, two permanent magnets the same as those used in Example 1 were used.

One magnet was covered with aluminum and given blades. Here, an epoxy plastic cylinder of a diameter of 45 mm and a height of 20 mm was prepared and superconductors were attached to the top and bottom ends.

First, the double superconductor comprised of the epoxy plastic cylinder with superconductors provided at its top end and bottom end was placed at the bottom of an aluminum vessel. In this state, a rotation control device comprised of a rotary part with a magnet fixed to the front end was placed so that the magnet and bottom surface of the superconductor faced each other. The gap from the bottom of the vessel to the magnet was set at 8 mm.

Next, a permanent magnet provided with blades was placed at the bottom of the aluminum vessel. At this stage, the bottom of the vessel was fixed at a position giving a distance of 8 mm from the top surface of the superconductor attached to the epoxy plastic cylinder.

In this state, the vessel housing the superconductor was filled with liquid nitrogen to cool the superconductor for about 15 minutes. After cooling, the rotation control device was moved upward by about 4 mm. Due to this movement, the double superconductor of the superconductor/epoxy plastic/superconductor and permanent magnet move upward by about 4 mm. The double superconductor levitates in the liquid nitrogen. Further, the topmost magnet levitates in the air.

Next, the rotation control device was rotated to confirm that the blades attached to the upper magnet rotate. When rotating the rotation control device at 50 rpm, the upper magnet also rotated at 50 rpm. This shows that the rotation of the rotation control device was transferred through the double superconductor to the upper magnet.

Next, the liquid nitrogen was allowed to evaporate once to return the rotation control device to its original position, then the vessel was filled with water and blue paint. The rotation control device was again moved upward and fixed at a position giving a distance of 8 mm from the bottom of the vessel to the top surface of the superconductor.

In this state, the vessel housing the double superconductor was filled with liquid nitrogen to cool the double superconductor for 15 minutes. In this cooling state, the rotation control device was moved upward about 4 mm. Due to this movement, both the double superconductor and permanent magnet moved upward by about 4 mm.

Due to this, the double superconductor levitated in the liquid nitrogen and the upper magnet levitated in the water. In this levitating state, the rotation control device was rotated, whereupon the blades attached to the upper magnet rotated, the water was stirred, and the blue paint dissolving in the water could be observed.

With the means for transmitting rotation of one magnet to another magnet, the use of a double superconductor of a superconductor/epoxy plastic/superconductor configuration enabled us to suppress interface between magnets and facilitate the initial settings.

### Example 3

In the stirring device of Example 2, the blades rotated tracking the other magnet up to a rotational speed of 20 rpm, but were slightly delayed in rotation at greater rotational speeds. This is because the magnetic coupling between the superconductor and magnets was insufficient, the torque was insufficiently transmitted, and the viscosity resistance of water caused a delay in the rotation.

A superconductor is paramagnetic above the critical temperature, so the magnetic fields formed by the permanent magnets pass through the superconductor as they are, but when the superconductor were to include a ferromagnetic material (for example, iron) inside it, the magnetic fields would concentrate at the ferromagnetic material.

If making the superconductor superconductive in the concentrated state of this magnetic field, the magnetic field is fixed in the state with the magnetic field concentrated at the ferromagnetic material, so a large torque can be secured. Therefore, the superconductor was processed as follows.

Five holes of 1 mm diameters were drilled in the superconductor at a total of five locations: the center and four positions 12.5 mm from the center at equal intervals along the outer circumference. Cylindrical rods made of iron (ferromagnetic materials) of diameters of 0.9 mm and lengths of 15 mm were inserted into the holes, then the gaps were filled with Pb-Bi-Sn-Cd alloy melted at 100°C to fix the cylindrical rods (see FIG. 7).

This superconductor containing the ferromagnetic material was used to conduct a stirring test similar to Example 2. As a result, it was confirmed that the blades were not greatly delayed and rotated stably in the water up to a rotational speed of 50 rpm. That is, it was confirmed that by using a superconductor containing a ferromagnetic material as the superconductor, high speed, stable stirring is possible.

### Example 4

An aluminum disk having a diameter of 100 mm and a height of 10 mm was formed with holes of a diameter of 25 mm into which four commercially available bulk Y-Ba-Cu-O-based superconductors of diameters of 25 mm and heights of 10 mm were embedded in a symmetric arrangement. The disk was used as the superconductor of the stirring device shown in FIG. 5 (in the figure 2).

Next, aluminum disks having diameters of 100 mm and heights of 15 mm were embedded with four commercially available Fe-Nd-B magnets having diameters of 14 mm and heights of 10 mm in a symmetric arrangement with NSNS magnet poles. The disks into which the magnets were embedded (magnetic disks) were arranged above and below the disk into which the superconductors were embedded (superconductor disk) as shown in FIG. 5 and subjected to a stirring experiment.

In the initial arrangement, however, the superconductor disk contacted the bottom of the vessel 11 and the distance between the drive side magnet disk and the driven side magnet disk was 10 mm.

In this state, the superconductors were cooled by liquid nitrogen for 15 minutes. After this, the drive side magnet disk was moved upward by 5 mm by a jack. Along with this movement, both the superconductor disk and the driven side magnet disk above the superconductor disk rose 5 mm.

When the drive side magnet disk was rotated in this raised state, the superconductor disk and the driven side magnet disk rotated linked with this.

The rotational speed was measured, whereupon it was confirmed that up to 20 rpm, the rotation of the drive side magnet disk can be transmitted to the driven side magnet disk without delay. As a result, it was confirmed that even if using a superconductor disk provided with a plurality of superconductors, rotation can be transmitted in a non-contact state.

As explained above, according to the present invention, it is possible to provide a superconductive non-contact stirring device which can prevent contamination of the stirred material and can efficiently stir the material. Therefore, the present invention has great utilizability in the medical and bio industries and in the semiconductor industry.

While the invention has been described with reference to specific embodiments chosen for purpose of illustration, it should be apparent that numerous modifications could be made thereto by those skilled in the art without departing from the basic concept and scope of the invention.

## Claims

1. A superconductive non-contact rotary device comprising;
a bulk superconductor having a pinning effect arranged in a heat insulating cryogenic vessel,
a permanent magnet arranged at one side of the vessel so as to face one surface of the bulk superconductor across a wall, and
a permanent magnet arranged at the other side of the vessel facing the other surface of the bulk superconductor across a wall,
one permanent magnet being rotated to make the other permanent magnet rotate in a non-contact state.

2. A superconductive non-contact rotary device comprising;
a double bulk superconductor unit, comprised of bulk superconductors having a pinning effect fixed to the two ends of a nonmagnetic member, arranged in a heat insulating cryogenic vessel,
a permanent magnet arranged at one side of the vessel so as to face one surface of the double bulk superconductor unit across a wall, and
a permanent magnet arranged at the other side of the vessel facing the other surface of the double bulk superconductor unit across a wall,
one permanent magnet being rotated to make the other permanent magnet rotate in a non-contact state.

3. A superconductive non-contact rotary device as set forth in claim 1 or 2, wherein a shaft is provided at one of said permanent magnets, a permanent magnet having a pole surface perpendicular to the shaft is fastened to the other end of the shaft, the heat insulating cryogenic vessel in which the bulk superconductor having the pinning effect is arranged so that one surface of the bulk superconductor faces the pole surface of the permanent magnet across the wall, and precessional motion of the shaft is suppressed.

4. A superconductive non-contact rotary device as set forth in any one of claims 1 to 3, wherein said bulk superconductor is a superconductor of a composite structure containing a ferromagnetic material.

5. A superconductive non-contact rotary device as set forth in any one of claims 1 to 4, wherein said bulk superconductor is a superconductor comprised of a plurality of superconductors.

6. A superconductive non-contact rotary device as set forth in any one of claims 1 to 5, wherein said bulk superconductor is a superconductor provided with facing surfaces larger than the pole surfaces of the facing permanent magnets.

7. A superconductive non-contact rotary device as set forth in any one of claims 1 to 6, wherein said permanent magnets are multipole structure permanent magnets.

8. A superconductive non-contact rotary device as set forth in any one of claims 1 to 7, wherein stirring blades are attached to one of said permanent magnets and the stirring blades are rotated in a non-contact state through the wall of a sealed vessel.

9. A superconductive non-contact rotary device as set forth in any one of claims 1 to 8, wherein a turntable is attached to one of said permanent magnets and the turntable is rotated in a non-contact state through the wall of a sealed vessel.
